# EUROPEAN PATENT APPLICATION

(11) **EP 4 354 615 A1**
(43) Date of publication of application: **17.04.2024**
(21) Application number: 21965928.1
(22) Date of filing: 30.11.2021
(51) Int. Cl.: H01M 50/209

(54) **BATTERY MODULE, BATTERY PACK, ELECTRIC DEVICE, AND METHOD FOR MANUFACTURING BATTERY MODULE**

(71) Applicant: Contemporary Amperex Technology Co., Limited, Ningde, Fujian 352100 (CN)
(72) Inventor: LI, Quanguo, Ningde, Fujian 352100 (CN); YE, Yonghuang, Ningde, Fujian 352100 (CN); LIU, Qian, Ningde, Fujian 352100 (CN); HE, Jianfu, Ningde, Fujian 352100 (CN); XU, Xiaofu, Ningde, Fujian 352100 (CN)
(74) Representative: Ziebig Hengelhaupt Intellectual Property Attorneys Patentanwaltskanzlei PartGmbB
(86) International application number: PCT/CN2021/134552
(87) International publication number: WO 2023/097490

(57) **Abstract**

The present application provides a battery module. The battery module includes at least two rows of battery cells stacked together along the width direction of the battery cells, the at least two rows of battery cells comprising a first row of battery cells and a second row of battery cells that are adjacent to each other; the first row of battery cells and the second row of battery cells include a plurality of battery cells in total, wherein some of the battery cells in the plurality of battery cells have different lengths from the remaining battery cells, and wherein, along the width direction of the battery cells, a centerline along the length direction of at least one battery cell in the first row of battery cells is not collinear with a centerline along the length direction of at least one battery cell in the second row of battery cells. The present application further provides a battery pack, an electrical apparatus, and a manufacturing method for a battery module.

## Description

### TECHNICAL FIELD

The present application relates to the field of batteries, and in particular to a battery module, a battery pack, an electrical apparatus, and a manufacturing method for a battery module.

### BACKGROUND ART

Energy saving and emission reduction is the key to the sustainable development of automobile industry, and electric vehicles have become an important part of the sustainable development of automobiles due to their advantages of energy saving and environmental protection. For electric vehicles, battery technology is an important factor related to their development.

For battery technology, there is always a need to improve the energy density of the battery pack, enhance the structural strength of the battery pack, improve the temperature uniformity of the battery pack, and improve the heat dissipation capacity of the battery pack.

### SUMMARY OF THE INVENTION

In view of the above problems, the present application provides a battery module, a battery pack and an electrical apparatus, which can realize at least one of improving the energy density of the battery pack, enhancing the structural strength of the battery pack, improving the temperature uniformity of the battery pack, and improving the heat dissipation capacity of the battery pack.

In a first aspect, the present application provides a battery module. The battery module includes at least two rows of battery cells stacked together along the width direction of the battery cells, the at least two rows of battery cells comprising a first row of battery cells and a second row of battery cells that are adjacent to each other; the first row of battery cells and the second row of battery cells include a plurality of battery cells in total, wherein some of the battery cells in the plurality of battery cells have different lengths from the remaining battery cells, and wherein, along the width direction of the battery cells, a centerline along the length direction of at least one battery cell in the first row of battery cells is not collinear with a centerline along the length direction of at least one battery cell in the second row of battery cells.

Through a staggered structure of the battery cells with different lengths in the present application, the structural rigidity of the battery pack can be enhanced. In addition, since the centers of surfaces with the largest area of the battery cells in the adjacent rows are offset from each other along the width direction of the battery cells, the accumulated expansion degree of the centers of the surfaces with the largest area of the multiple rows of battery cells along the width direction of the battery cells is reduced, the overall expansion degree of the battery module is effectively controlled; after the battery module is mounted in the battery pack, the probability of severe extrusion deformation or even fracture two side structures of the battery pack located in the width direction of the battery cells due to the overall expansion of the battery module is reduced, thereby reducing the strength requirements for the two side structures of the battery pack and further reducing the overall weight of the battery pack.

In some embodiments, the first row of battery cells and the second row of battery cells have the same overall length, and the edge along the length direction of the first row of battery cells is flush with the edge along the length direction of the second row of battery cells. The adjacent rows of battery cells have the same length and the edges thereof in the length direction are flush, so that the battery module can be formed into a regular shape such as a solid, the space utilization rate can be maximized, and the energy density can be improved.

In some embodiments, along the width direction of the battery cells, the centerline along the length direction of each battery cell in the first row of battery cells is not collinear with the centerline along the length direction of each battery cell in the second row of battery cells. The effect of the staggered structure can be further improved by configuring each battery cell in the adjacent rows of battery cells so that the centerlines are not collinear along the width direction of the battery cells.

In some embodiments, the plurality of battery cells includes first battery cells and second battery cells, and the first battery cells and the second battery cells have different lengths. The battery cells with longer lengths can provide greater rigidity, and the battery cells with shorter lengths can provide better heat dissipation. Through the cooperation of the battery cells with different lengths, a better balance and optimization can be achieved between the overall rigidity and heat dissipation capacity of the battery module.

In some embodiments, the first row of battery cells is composed of the first battery cells arranged along the length direction, and the second row of battery cells is composed of the second battery cells arranged along the length direction. This provides an option for the selection and arrangement of the battery cells in the battery module. Appropriate selection can be made according to the size requirements and energy density requirements of the battery module.

In some embodiments, the first row of battery cells is composed of the first battery cells arranged along the length direction, and the second row of battery cells is composed of the first battery cells and the second battery cells arranged along the length direction. This provides another option for the selection and arrangement of the battery cells in the battery module. Appropriate selection can be made according to the size requirements and energy density requirements of the battery module.

In some embodiments, the first row of battery cells is composed of the first battery cells and the second battery cells arranged in a first order along the length direction, the second row of battery cells is composed of the first battery cells and the second battery cells arranged in a second order along the length direction, and the first order is different from the second order. This provides another option for the selection and arrangement of the battery cells in the battery module. Appropriate selection can be made according to the size requirements and energy density requirements of the battery module.

In some embodiments, the first row of battery cells includes m layers of first battery cells arranged along the width direction of the battery cells and n layers of second battery cells arranged along the width direction of the battery cells, the m layers of first battery cells and the n layers of second battery cells are arranged along the length direction of the battery cells, m is different from n, and the m layers of first battery cells and the n layers of second battery cells have the same width. This allows batteries with different widths to be arranged in the same row, providing another option for the selection of battery cells in the battery module and the selection of the arrangement. Appropriate selection can be made according to the size requirements and energy density requirements of the battery module.

In some embodiments, the second row of battery cells includes m layers of first battery cells arranged along the width direction of the battery cells and n layers of second battery cells arranged along the width direction of the battery cells, the m layers of first battery cells and the n layers of second battery cells are arranged along the length direction of the battery cells, m is different from n, and the m layers of first battery cells and the n layers of second battery cells have the same width. This allows batteries with different widths to be arranged in the same row, providing another option for the selection of battery cells in the battery module and the selection of the arrangement. Appropriate selection can be made according to the size requirements and energy density requirements of the battery module.

In some embodiments, the plurality of battery cells further include third battery cells of which the length is different from the lengths of both the first battery cells and the second battery cells, the first row of battery cells is composed of the third battery cells arranged along the length direction, the second row of battery cells includes m layers of first battery cells arranged along the width direction of the battery cells and n layers of second battery cells arranged along the width direction of the battery cells, the m layers of first battery cells and the n layers of second battery cells are arranged along the length direction of the battery cells, m is different from n, and the m layers of first battery cells and the n layers of second battery cells have the same width. This provides another option for the selection and arrangement of the battery cells in the battery module. Appropriate selection can be made according to the size requirements and energy density requirements of the battery module.

In some embodiments, the battery module further includes a third row of battery cells adjacent to the second row of battery cells along the width direction, and the arrangement of the battery cells in the third row of battery cells is the same as that of the battery cells in the second row of battery cells or the first row of battery cells. This provides another option for the selection and arrangement of the battery cells in the battery module. Appropriate selection can be made according to the size requirements and energy density requirements of the battery module.

In some embodiments, along the width direction of the battery cells, the battery module includes multiple first rows of battery cells and second rows of battery cells arranged alternately. By arranging multiple rows of battery cells, the effect of the staggered structure can be further improved, and the energy of the battery pack can be increased.

In some embodiments, along the width direction of the battery cells, the battery module includes multiple first rows of battery cells, second rows of battery cells and third rows of battery cells arranged alternately. By arranging multiple rows of battery cells, the effect of the staggered structure can be further improved, and the energy of the battery pack can be increased.

In some embodiments, the length of the first battery cells is greater than the length of the second battery cells, and along the width direction of the battery cells, the centerline along the length direction of the first battery cells in the first row of battery cells is substantially opposite to a side wall of one of the second battery cells in the second row of battery cells. Since expansion is mostly severe at the centerline along the length direction of the battery cell, while expansion is relatively light at side walls, by arranging the portion with the most severe expansion opposite to the portion with relatively light expansion, the accumulation of expansion of the adjacent rows of battery cells in the battery pack along the width direction of the battery cells can be further alleviated.

In some embodiments, the positive electrode active material of the first battery cells is different from that of the second battery cells. This can provide a variety of options for the battery cells in the battery pack, such as selecting the appropriate battery cells according to energy density requirements.

In some embodiments, the battery module includes two end plates disposed along the width direction, the end plate includes a first surface close to the battery cells and a second surface away from the battery cells, and along a vertical direction, the second surface includes a middle portion and two inclined portions disposed on two sides of the middle portion and inclined from the middle portion towards the first surface. By arranging the end plates and forming the end plates to be thicker in the middle, the inclined portions are thinner than the middle portion, so that the middle portion of the end plate can withstand a greater expansion force at the centers of the surfaces with the largest area of the battery cells, while the inclined portions on two sides are more conducive to binding the rows of battery cells in cooperation with a strap.

In some embodiments, the end plate further includes two stopper portions, and each stopper portion is disposed on the side of the inclined portion away from the middle portion. By arranging the stopper portions, it is possible to prevent the strap from slipping off the end plate.

In some embodiments, the battery module further includes a strap disposed on the periphery of the battery module, one end of the strap is connected to the inclined portion on the upper side of one end plate, and the other end is connected to the inclined portion on the lower side of the other end plate. By arranging the strap and through the cooperation of the strap and the end plates, the rows of battery cells can be bound in a way of saving overall mass, and the inclined binding of the strap also enables a binding force to be distributed in the overall thickness direction of the battery module, making the binding force more uniform and firm.

In some embodiments, there are two straps disposed crosswise. Through the straps disposed crosswise, it can be ensured that the battery module is subjected to the same expansion force on the upper and lower sides, and possible local uneven stress can be avoided.

In some embodiments, the battery module includes a buffer, and the buffer is disposed between two adjacent rows of battery cells. By arranging the buffer, it is possible to effectively alleviate the accumulation of the expansion degree of the battery cells in the battery pack along the width direction of the battery cells, and avoid causing large tension to a packaging structure of the battery pack (such as the end plates of the battery module or a box of the battery pack).

In some embodiments, the battery module includes a buffer having an outer frame and one or more support ribs disposed inside the outer frame, and a hollow structure is formed between the support ribs and the outer frame, and is opposite to the surface with the largest area of one battery cell in the first row of battery cells or the second row of battery cells. By arranging the buffer rib, the structural rigidity of the buffer can be improved, and the hollow structure can also provide a buffer space for the expansion of the surface with the largest area in the battery module.

In some embodiments, the support ribs abut against an edge along the length direction of at least one battery cell in the two adjacent rows of battery cells. By arranging the support ribs to abut against the edge along the length direction of the battery cell, when the battery cell expands, the center of the surface with the largest area can be prevented from abutting against the edge of the battery cell in the adjacent row, avoiding possible damage to the surface with the largest area, and further improving the safety of the battery pack.

In a second aspect, the present application also provides a battery pack, including a frame and at least one column of battery modules as described above, the at least one column of battery modules being accommodated in the frame, and each column of battery modules includes a plurality of battery modules arranged along the width direction of battery cells.

In some embodiments, the battery pack includes at least two columns of battery modules, and a longitudinal beam is provided between the two adjacent columns of battery modules.

The advantages of the battery pack are similar to those of the battery module mentioned above, and will not be repeated here.

In some embodiments, the battery pack further includes a cooling structure, the cooling structure includes a cooling channel meandering along the width direction of the battery cells, and the cooling channel is configured for the flowing of cooling fluid. By arranging the cooling channel meandering along the width direction of the battery cells, the contact area between the cooling channel and the battery cells can be increased, and the cooling effect can be further improved.

In some embodiments, along the width direction of the battery cells, the cross-sectional area of the cooling channel in the middle portion of the battery module is greater than the cross-sectional area of the cooling channel in the rest of the battery module. By setting the cross-sectional area of the cooling channel to be variable, the cooling effect in the middle portion of the battery pack can be enhanced, and the overall temperature of the battery pack can be more uniform.

In a third aspect, the present application also provides an electrical apparatus, wherein the electrical apparatus includes the battery pack as mentioned above, the battery pack being configured to provide electric energy.

The advantages of the electrical apparatus are similar to those of the battery module mentioned above, and will not be repeated here.

In a fourth aspect, the present application further provides a manufacturing method for a battery module, the manufacturing method including:
providing a plurality of battery cells, wherein some of the battery cells in the plurality of battery cells have different lengths from the remaining battery cells,
arranging the plurality of battery cells into at least two rows of battery cells along the width direction of the battery cells, the at least two rows of battery cells including a first row of battery cells and a second row of battery cells that are adjacent to each other, and
along the width direction of the battery cells, arranging a centerline along the length direction of at least one battery cell in the first row of battery cells to be not collinear with a centerline along the length direction of at least one battery cell in the second row of battery cells.

The advantages of the manufacturing method for the battery module are similar to those of the battery module mentioned above, and will not be repeated here.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

### DESCRIPTION OF DRAWINGS

Various other advantages and benefits will become apparent to those of ordinary skill in the art upon reading the following detailed description of the preferred embodiments. The drawings are for the purpose of illustrating the preferred embodiments only and are not to be considered a limitation to the present application. Also, the same components are denoted by the same reference numerals throughout the drawings. In the drawings:
Fig. 1 is a schematic structural diagram of a vehicle according to some embodiments of the present application;
Fig. 2 is an exploded schematic structural diagram of a conventional battery pack used in a vehicle;
Fig. 3 is a top schematic structural diagram of a first embodiment of a battery pack according to the present application;
Fig. 4 is a top schematic structural diagram of a second embodiment of a battery pack according to the present application;
Fig. 5 is a top schematic structural diagram of a third embodiment of a battery pack according to the present application;
Fig. 6 is a top schematic structural diagram of a fourth embodiment of a battery pack according to the present application;
Fig. 7 is a top schematic structural diagram of a fifth embodiment of a battery pack according to the present application;
Fig. 8 is a top schematic structural diagram of a sixth embodiment of a battery pack according to the present application;
Fig. 9 is a top schematic structural diagram of a seventh embodiment of a battery pack according to the present application;
Fig. 10 is a top schematic structural diagram of an eighth embodiment of a battery pack according to the present application;
Fig. 11 is a top schematic structural diagram of a ninth embodiment of a battery pack according to the present application;
Fig. 12 is a top schematic structural diagram of a tenth embodiment of a battery pack according to the present application;
Fig. 13 is a schematic structural diagram of end plates according to the present application;
Fig. 14 is a side schematic structural diagram of a battery pack according to the present application;
Fig. 15 is an exploded schematic structural diagram of battery cells and buffers in a battery module according to the present application;
Fig. 16 is a schematic structural diagram of a first embodiment of a buffer according to the present application;
Fig. 17 is a schematic structural diagram of a second embodiment of a buffer according to the present application;
Fig. 18 is a schematic structural diagram of a third embodiment of a buffer according to the present application;
Fig. 19 is a schematic structural diagram of a fourth embodiment of a buffer according to the present application;
Fig. 20 is a schematic structural diagram of a fifth embodiment of a buffer according to the present application;
Fig. 21 is a schematic structural diagram of a sixth embodiment of a buffer according to the present application; and
Fig. 22 is a schematic structural diagram of a cooling structure of a battery pack according to the present application.

Reference numerals in Detailed Description are as follows:
vehicle 1000;
battery 100, controller 200, motor 300;
battery pack 1, battery module 10, lower box 20, power management module 30, cooling structure 40, upper end cover 50, box protection bottom plate 60; longitudinal beam 201; cross beam 202;
first battery cell 11, second battery cell 12, third battery cell 13, first row of battery cells 10a, second row of battery cells 10b, third row of battery cells 10c, fourth row of battery cells 10d;
end plate 14, first surface 140, second surface 141, middle portion 142, inclined portion 143, stopper portion 144;
strap 15;
buffer 16, frame 160, support rib 161;
cooling channel 400.

### DETAILED DESCRIPTION

Examples of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific examples and are not intended to limit the present application; the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of' is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that front and rear associated objects are in an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

At present, from the perspective of the development of the market situation, power batteries are more and more widely used. The power batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the power batteries, the market demand is also constantly expanding.

The inventors have noticed that as ions are embedded into or released from positive electrode active material and negative electrode active material during a charge-discharge cycle of a battery cell, the battery cell will expand due to the side reaction accumulation thickness of a battery cell system and the peeling off of graphite sheets, the expansion of the battery cell usually occurs in the surface with the largest area of the battery cell, and the expansion degree is more severe at a centerline along the length direction of the surface with the largest area, but less at edges of the surface with the largest area. The battery pack is usually provided with multiple rows of battery cells, and expansion of the multiple rows of battery cells may be accumulated with each other, resulting in severe extrusion, deformation or even fracture of the battery cells and packaging structures on two sides of the battery pack, which is not only unfavorable to the safety of the battery pack itself, but may also lead to an increase in the overall weight of the battery pack and a decrease in the energy density of the battery pack if the packaging structures on two sides are strengthened. The packaging structure of the battery pack may include end plates on two sides of the battery module or a box structure of the battery pack.

In addition, the battery cells may generate heat during the charge-discharge cycle, and generally longer battery cells have worse heat dissipation capacity. For the battery cell, the portion near the edges of the battery cell has faster heat dissipation and lower temperature, and the position near the middle of the battery cell has poor heat dissipation and high temperature, which may make polarization of the same battery cell at the low temperature portions on two sides greater than that at the high temperature portion in the middle, make the same battery cell has different charge-discharge capacity at different positions, easily leading to lithium plating from electrode plates at the low temperature portions and thus leading to safety accidents.

In addition, since the battery pack needs to have sufficient rigidity to avoid damage or breakage when in use, the battery pack is usually provided with various reinforcement structures therein, such as various cross beams and longitudinal beams. Although the reinforcement structures can improve the overall rigidity of the battery pack, the arrangement of the reinforcement structures will also occupy the space in the battery pack and reduce the energy density of the battery pack.

Therefore, improving the energy density of the battery pack, enhancing the structural strength of the battery pack, improving the temperature uniformity of the battery pack, and improving the heat dissipation capacity of the battery pack have always been research directions in the field of batteries. The overall performance of the battery pack can be improved by any one of improving the energy density of the battery pack, enhancing the structural strength of the battery pack, improving the temperature uniformity of the battery pack, or improving the heat dissipation capacity of the battery pack.

To further improved the overall performance of the battery pack, the inventors designed a battery module of a battery pack through in-depth research. The battery module includes at least two rows of battery cells stacked together along the width direction of the battery cells, the at least two rows of battery cells comprising a first row of battery cells and a second row of battery cells that are adjacent to each other; the first row of battery cells and the second row of battery cells include a plurality of battery cells in total, wherein some of the battery cells in the plurality of battery cells have different lengths from the remaining battery cells, and wherein, along the width direction of the battery cells, a centerline along the length direction of at least one battery cell in the first row of battery cells is not collinear with a centerline along the length direction of at least one battery cell in the second row of battery cells.

In the new battery module proposed by the inventors, a staggered structure is formed by the non-collinear centerlines of the battery cells in the adjacent rows of battery cells, and the rigidity of the battery module is enhanced by the staggered structure itself, so that the use of reinforcement structures in the battery pack can be reduced. In addition, due to the staggered structure, centerlines along the length direction of the surfaces with the largest area of the battery cells in the adjacent rows are not collinear, which reduces the accumulation of the expansion degree of the battery cells, and thus reduce the extrusion to the packaging structures on two sides of the battery pack.

In addition, the use of batteries with different lengths allows for more convenient use of batteries with different chemical systems, and the batteries with different chemical systems have different energy densities, so that the energy density can be adjusted more conveniently by selecting the number and arrangement of the batteries with different lengths.

Moreover, by properly selecting the lengths of the batteries, the battery module with a staggered structure can be formed into a regular structure, such as a conventional square structure, which can maximize the space utilization rate and improve the energy density in a limited space.

The battery cell disclosed in the embodiments of the present application can be used, but not limited to, in electrical apparatuses such as a vehicle, a ship, or an aircraft. A power supply system of the electrical apparatus may be composed of the battery cells and batteries disclosed in the present application.

Embodiments of the present application provide an electrical apparatus that uses a battery as a power supply, and the electrical apparatus may be, but is not limited to, a mobile phone, a tablet, a laptop, an electric toy, an electric tool, a battery vehicle, an electric vehicle, a ship, a spacecraft, and so on. The electric toy may include fixed or mobile electric toys, such as game consoles, electric car toys, electric ship toys, electric airplane toys, and the like. The spacecraft may include airplanes, rockets, space shuttles, spaceships, and the like.

For the convenience of description, the following embodiments are illustrated with an example in which the electrical apparatus according to an embodiment of the present application is a vehicle 1000.

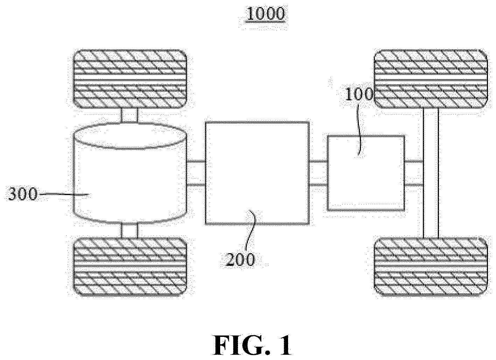

Please refer to Fig. 1, Fig. 1 is a schematic structural diagram of a vehicle 1000 according to some embodiments of the present application. The vehicle 1000 may be a fuel vehicle, a gas vehicle, or a new energy vehicle, and the new energy vehicle may be an all-electric vehicle, a hybrid vehicle, or an extended-range electric vehicle. The interior of the vehicle 1000 is provided with a battery 100, and the battery 100 may be provided at the bottom or head or tail of the vehicle 1000. The battery 100 may be configured to power the vehicle 1000. For example, the battery 100 may be used as an operating power source of the vehicle 1000. The vehicle 1000 may further include a controller 200 and a motor 300. The controller 200 is configured to control the battery 100 to power the motor 300, for example, configured to meet operating power requirements when the vehicle 1000 is starting, navigating and driving.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

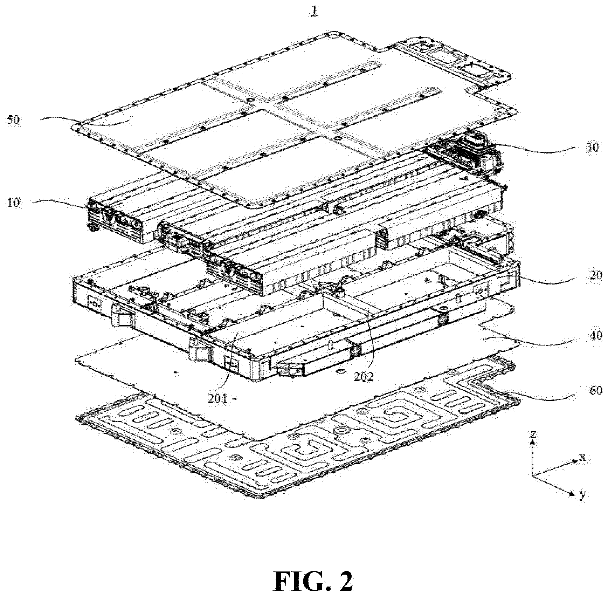

Please referring to Fig. 2, Fig. 2 is an exploded schematic structural diagram of a conventional battery pack used in a vehicle. The battery pack 1 include a battery module 10, a lower box 20, a power management module 30, a cooling structure 40, an upper end cover 50 and a box protection bottom plate 60.

The lower box 20 and the upper end cover 50 are configured to provide an accommodating space for the battery module 10 when closed together. The lower box body 20 may be a hollow structure with one end open, the upper end cover 50 may be a plate-shaped structure, and the upper end cover 50 covers the open end of the lower box 20, so that the lower box 20 and the upper end cover 50 jointly define the accommodating space. For example, both the lower box 20 and the upper end cover 50 may be a hollow structure with one end open, and the open end of the lower box 20 covers the opening end of the lower end cover 50. Certainly, a box body formed by the lower box 20 and the upper end cover 50 can be of various shapes, such as a cylinder or a cuboid.

The battery module 10 includes a plurality of battery cells. There may be a plurality of battery cells, and the plurality of battery cells 20 can be connected in series, in parallel or in a mixed connection, wherein the mixed connection means that the plurality of battery cells are connected in both series and parallel. The plurality of battery cells can be directly connected in series, in parallel or in a mixed connection, and then a whole body composed of the plurality of battery cells is accommodated into the lower box 20. Certainly, the plurality of battery cells may be first connected in series, in parallel or in a mixed connection to form a battery module 10, and the plurality of battery modules are further connected in series, in parallel or in a mixed connection to form a whole, and accommodated in the lower box 20. The battery pack 1 may further include other structures, for example, the battery pack 1 may further include a bus member configured to achieve electrical connection of the plurality of battery cells.

Each battery cell may be a secondary battery or a primary battery; or may be a lithium-sulfur battery, a sodium-ion battery or a magnesium-ion battery, but is not limited thereto. The battery cells may be flat, rectangular, or in other shapes.

The power management module 30 may be arranged in the lower box 20, for example, arranged in the front end portion of the lower box 20. The power management module 30 can supply power to the battery cells in the battery pack, and can monitor various data of the battery pack, such as voltage monitoring, current monitoring, temperature monitoring, insulation monitoring, state of charge monitoring, and can obtain voltage, current, temperature, state of charge and so on as thermal runaway detection data.

The cooling structure 40 is arranged under the lower box 20, and a cooling channel is disposed in the cooling structure 40, and cooling liquid may circulate in the cooling channel for cooling the battery pack 1.

The box protection bottom plate 60 is arranged under the cooling structure 40 for protecting the lower box 20 and preventing the battery pack 1 from being damaged, for example, by an impact from below. The box protection bottom plate, the lower box body and the upper end cover may be formed of copper, iron, aluminum, stainless steel, aluminum alloy, or the like, which are not particularly limited in the present application.

In addition, as shown in Fig. 2, longitudinal beams 201 and a cross beam 202 are disposed in the lower box 20, and the longitudinal beams and the cross beam are respectively arranged between each battery module 10 to increase the overall rigidity of the battery pack 1. In Fig. 2, one cross beam 202 and two longitudinal beams 201 define an accommodating space for six battery modules 10.

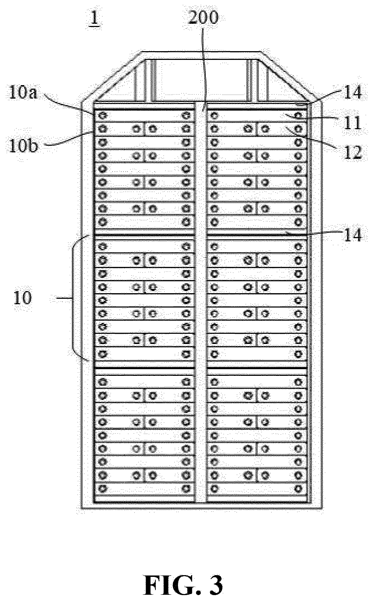

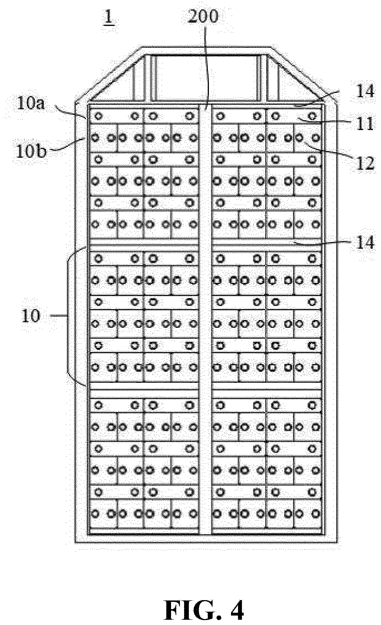

According to some embodiments of the present application, referring to Fig. 3, and further referring to Fig. 4-Fig. 12, top schematic structural diagrams of different embodiments of the battery pack 1 according to the present application are shown, wherein in Fig. 3-Fig. 12, the upper end cover 50 of the battery pack 1 is removed to more clearly show the arrangement of the battery module 10.

Fig. 3 shows a first embodiment of the battery module 10. The battery module 10 includes at least two rows of battery cells stacked together along the width direction of the battery cells, the at least two rows of battery cells comprising a first row of battery cells 10a and a second row of battery cells 10b that are adjacent to each other; the first row of battery cells 10a and the second row of battery cells 10b include a plurality of battery cells in total, wherein some of the battery cells 11 in the plurality of battery cells have different lengths from the remaining battery cells 12, and wherein, along the width direction of the battery cells, a centerline along the length direction of at least one battery cell 11 in the first row of battery cells 10a is not collinear with a centerline along the length direction of at least one battery cell 12 in the second row of battery cells 10b.

The battery cell is of a square case structure with six surfaces. The "width direction" is the x direction in Fig. 2, and the "width direction" is perpendicular to two opposite surfaces with the largest area of the battery cells. The "length direction" is the y direction in Fig. 2, and the "length direction" is parallel to the two opposite surfaces with the largest area of the battery cells. The "centerline along the length direction of the battery cell" is a line extending through the centers of the two opposite surfaces with the largest area along the x direction of the battery cells. The "width direction" is perpendicular to the "length direction". The "height direction" is perpendicular to the "width direction" and the "length direction". In some embodiments, the battery cell includes a top cover and a case, and the top cover and the bottom wall of the case are oppositely disposed in the "height direction". But the positions and structures of the top cover and the case are not limited to this.

As shown in Fig. 3, by arranging the centerline along the length direction of at least one battery cell 11 in the first row of battery cells 10a to be not collinear with the centerline along the length direction of at least one battery cell 12 in the second row of battery cells 10b, the center of the surface with the largest area of the at least one battery cell 11 can be arranged to be offset from that of the surface with the largest area of the at least one battery cell 12. Since the battery cell expands during repeated cycles of charge and discharge, and the expansion is more severe at the center of the surface with the largest area, and lighter at the end portions of the battery cell. If the centers of the surfaces with the largest area of the battery cells in the adjacent rows are aligned along the width direction, expansion at the centers of the surfaces with the largest area will be directly accumulated, so that the overall expansion degree of the entire battery module 10 deteriorates, causing severe extrusion to the packaging structures on two sides of the battery pack. By arranging the center of the surface with the largest area of at least one battery cell 11 to be offset from the center of the surface with the largest area of at least one battery cell 12, the overall expansion degree of the battery pack can be effectively alleviated.

In addition, by arranging the center of the surface with the largest area of at least one battery cell 11 to be offset from the center of the surface with the largest area of at least one battery cell 12, an effective staggered structure can be formed, and the staggered structure itself can provide enhanced rigidity for the battery module 10, which is beneficial to reducing the need for the use of cross beams in the battery pack. Comparing Fig. 2 with Fig. 3, it can be found that the battery pack of the present application eliminates the use of the cross beam 202, which can further improve the space utilization rate of the battery pack 1 and increase the capacity of the battery pack 1.

Fig. 4-Fig. 12 show second to tenth embodiments of the battery module 10. Each of the second embodiment to the tenth embodiment of the battery module 10 includes at least two rows of battery cells stacked together along the width direction of the battery cells, the at least two rows of battery cells comprising a first row of battery cells 10a and a second row of battery cells 10b that are adjacent to each other, and the first row of battery cells 10a and the second row of battery cells 10b include a plurality of battery cells in total, wherein some of the battery cells in the plurality of battery cells have different lengths from the remaining battery cells, and wherein, along the width direction of the battery cells, a centerline along the length direction of at least one battery cell in the first row of battery cells 10a is not collinear with a centerline along the length direction of at least one battery cell in the second row of battery cells 10b.

Some of the battery cells shown in the first to tenth embodiments of the battery module 10 are elongated cuboid batteries, some of the battery cells are ordinary cuboid batteries, and some of the battery cells are cubic batteries.

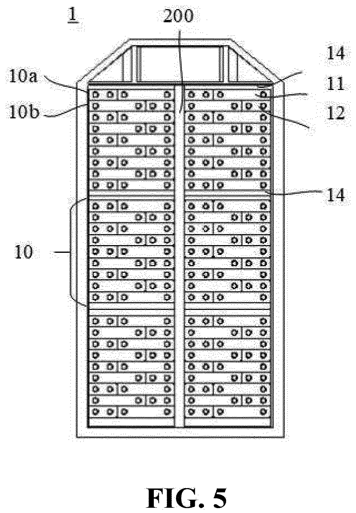

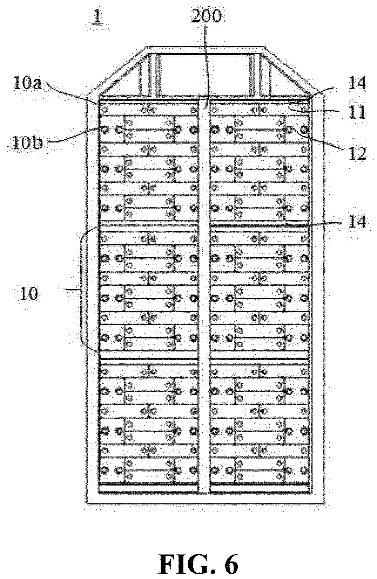

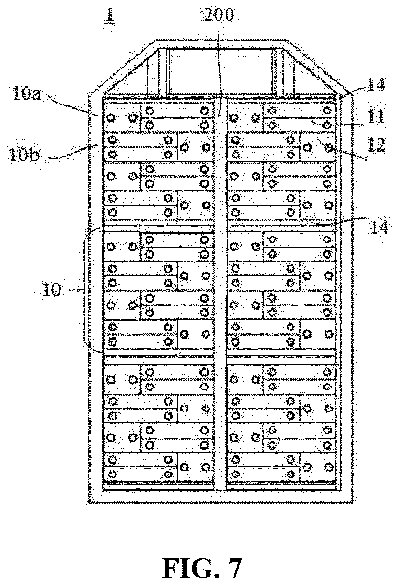

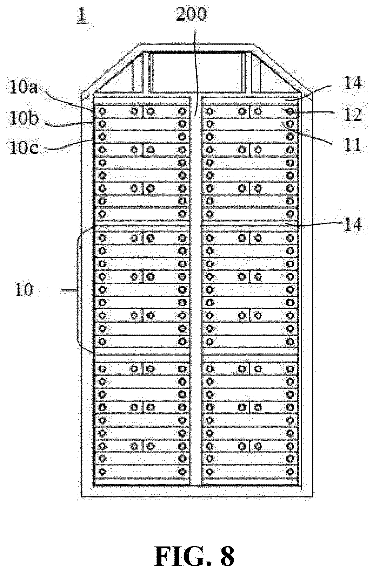

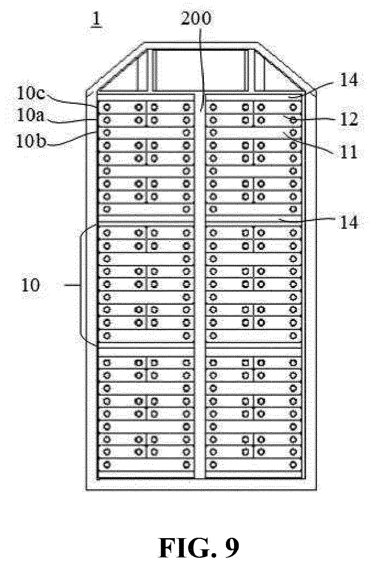

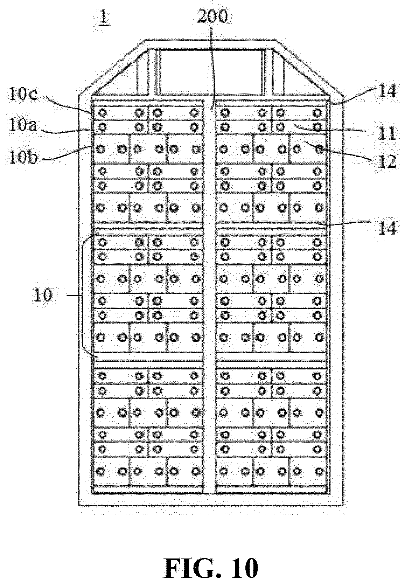

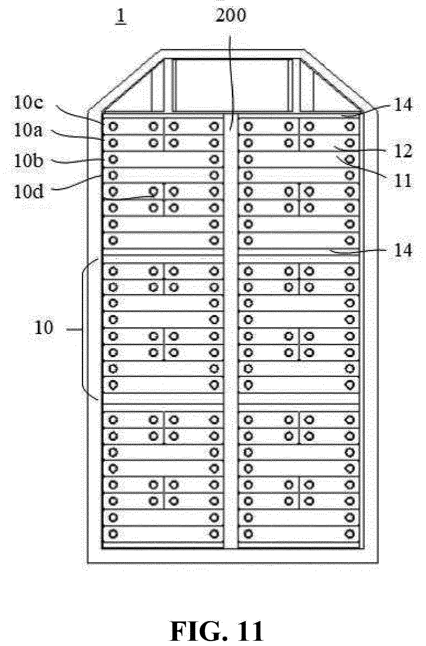

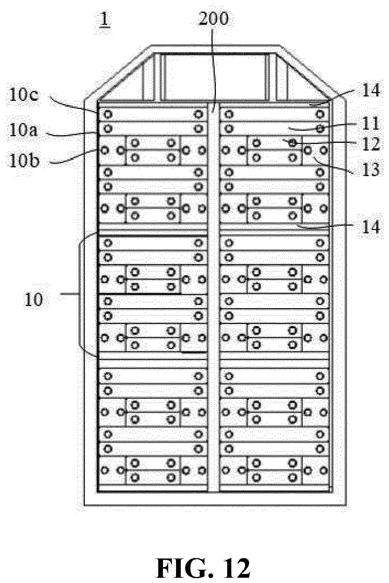

The differences between the first to tenth embodiments of the battery module 10 mainly are the different sizes of the battery cells and the different combinations and arrangements of the battery cells in adjacent rows included in each embodiment. In addition to this, the other structures of the first to tenth embodiments of the battery module 10 are basically the same, and the repeated parts between the different embodiments will not be repeated below. For example, in the first embodiment of the battery module 10 in Fig. 3, in the third embodiment of the battery module 10 in Fig. 5, in the sixth embodiment of the battery module 10 in Fig. 8, in the seventh embodiment of the battery module 10 in Fig. 9, in the ninth embodiment of the battery module 10 in Fig. 11, and in the tenth embodiment of the battery module 10 in Fig. 12, the width of the first battery cell 11 is the same as that of the second battery cell 12, but the length is twice that of the second battery cell 12. However, in the second embodiment of the battery module 10 in Fig. 4, in the fourth embodiment of the battery module 10 in Fig. 6, and in the fifth embodiment of the battery module 10 in Fig. 7, the length of the first battery cell 11 is twice that of the second battery cell 12, and the width of the second battery cell 12 is twice that of the first battery cell 11. Regarding dimensional relationships between the different battery cells in the present application, firstly, it is not limited to an integer relationship, for example, in the eighth embodiment of the battery module 10 in Fig. 10, the length of the first battery cell 11 is 1.5 times that of the second battery cell 12; and secondly, it is also not limited to ten dimensional relationships disclosed in the embodiments of Fig. 3-Fig. 12. Fig. 3-Fig. 10 only disclose some possible ways in an example manner, which is not particularly limited in the present application.

Returning to Fig. 3 again, the first row of battery cells 10a and the second row of battery cells 10b have the same overall length, and the edge along the length direction of the first row of battery cells 10a is flush with the edge along the length direction of the second row of battery cells 10a.

"The edge along the length direction of the battery cells" refers to the side edge of the adjacent rows of battery cells extending along the x direction. "Flush with" means that the edges along the length direction of the adjacent rows of battery cells are collinear along the x-direction.

The adjacent rows of battery cells have the same length and the edges along the length direction thereof are flush, so that the battery module can be 10 may be formed into a solid, such a cuboid or a cube. Generally, a battery pack frame of the battery pack 1 and an accommodating space enclosed by the battery pack frame and longitudinal beams for accommodating the battery module 10 are solid in shape, so as to reduce the processing cost of the battery pack, maximize the space, and facilitate the installation of the battery pack. Therefore, in this case, the battery module 10 formed into the solid can further improve the utilization rate of the accommodating space of the battery pack 1, thereby further increasing the battery density.

The second to tenth embodiments of the battery module 10 shown in Fig. 4-Fig. 12 are also formed into the regular solid.

Returning to Fig. 3 again, along the width direction of the battery cells, the centerline along the length direction of each battery cell 11 in the first row of battery cells 10a is not collinear with the centerline along the length direction of each battery cell 12 in the second row of battery cells 10b.

By arranging each battery cell in the adjacent rows of battery cells to be not collinear, a firmer staggered structure can be formed and the accumulation of expansion at the center of the surface with the largest area of each battery cell in the adj acent rows of battery cells can be further relieved.

In the second embodiment to tenth embodiment of the battery module 10 shown in Fig. 4- Fig. 12, the centerline along the length direction of each battery cell in the first row of battery cells 10a is also not collinear with the centerline along the length direction of each battery cell in the second row of battery cells 10b. As described above, one of the differences between the second to tenth embodiments of the battery module 10 is that the dimensional relationship of the battery cells included in each embodiment is different.

In addition, in the first embodiment to the tenth embodiment of the battery module 10 shown in Fig. 3- Fig. 12, the length of the first battery cells 11 is different from that of the second battery cells 12.

Generally, the longer the length of battery cells, the worse the heat dissipation effect, but the stronger the structural rigidity. Through mutual cooperation of the battery cells with different lengths, acceptable or good heat dissipation effect can be achieved while ensuring the structural rigidity, and a good balance and improvement can be achieved between the structural rigidity and overall heat dissipation of the battery pack.

Returning to Fig. 3 again, in the first embodiment of the battery module 10 shown in Fig.3, the first row of battery cells 10a is composed of the first battery cells 11 arranged along the length direction, and the second row of battery cells 10b is composed of the second battery cells 12 arranged along the length direction. Specifically, the first row of battery cells 10a is composed of one first battery cell 11 arranged along the length direction, and the second row of battery cells 10b is composed of two second battery cells 12 arranged along the length direction. For example, the first row of battery cells 10a may be composed of a plurality of first battery cells 11 arranged along the length direction, and the second row of battery cells 10b may also be composed of one or more than two second battery cells 12 arranged along the length direction. The number of battery cells in each row can be selected according to needs, and the situation is similar for each embodiment in Fig. 4-Fig. 12, and will not be described in detail hereafter.

In Fig. 3, the first battery cell 11 is an elongated battery, and the elongated battery itself has a longer length, so the rigidity of the elongated battery is stronger than that of the second battery cell 12. In Fig. 3, since the first row of battery cells 10a is composed of one first battery cell 11, the elongated battery extends across the overall length direction (that is, the y direction in Fig. 2) of the battery pack 1. The elongated battery itself can play a role in increasing the rigidity. Furthermore, by staggered cooperation between the lengthened batteries and common batteries, the overall structural strength of the battery pack can be further improved, so that the cross beam extending in the length direction of the battery cells in the battery pack can be omitted in Fig. 3.

In the different embodiments shown in Fig. 4, Fig. 8, Fig. 9, Fig. 10 and Fig. 11, the first row of battery cells 10a is also composed of battery cells of one length arranged along the length direction, and the second row of battery cells 10b is composed of battery cells of another length arranged along the length direction. For example, in the different embodiments shown in Fig. 4, Fig. 8, Fig. 9, Fig. 10 and Fig. 11, the numbers of battery cells arranged in each row of battery cells are not limited to the numbers shown in the figures, but different numbers of battery cells can be arranged according to needs.

Referring to Fig. 6, in the fourth embodiment of the battery module 10 shown in Fig. 6, the first row of battery cells 10a is composed of first battery cells 11 arranged along the length direction, and the second row of battery cells 10b is composed of first battery cells 11 and second battery cells 12 arranged along the length direction. Specifically, in Fig. 6, the first row of battery cells 10a includes two first battery cells 11, and the second row of battery cells 10b includes two first battery cells 11 and two second battery cells 12, and the two second battery cells 11 are located between the two second battery cells 12.

Therefore, this provides an optional alternative for the selection and arrangement of different battery cells in the battery module 10, and can still achieve the advantages that the above staggered structure enhances the structural strength, and the centers of the surfaces with the largest area are offset so that the accumulation of expanded battery cells in the battery pack is relieved, and the space utilization rate and the battery energy density are improved.

Referring to Fig. 5, in the third embodiment of the battery module 10 shown in Fig. 5, the first row of battery cells 10a is composed of a first battery cell 11 and a second battery cell 12 arranged in a first order along the length direction; the second row of battery cells 10b is composed of a first battery cell 11 and a second battery cell 12 arranged in a second order along the length direction, and the first order is different from the second order. Specifically, in Fig. 5, the first row of battery cells 10a includes one first battery cell 11 and one second battery cell 12, and the first order is to arrange one second battery cell 12 and one first battery cell 11 in sequence from left to right; the second row of battery cells 10b also includes one first battery cell 11 and one second battery cell 12, but the second order is to arrange one first battery cell 11 and one first battery cell 12 in sequence from left to right.

Similarly, in the fifth embodiment of the battery module 10 shown in Fig. 7, the first row of battery cells 10a includes a second battery cell 12 and first battery cells 11 arranged in sequence from left to right, and the second row of battery cells 10b includes first battery cells 11 and a second battery cell 12 arranged in sequence from left to right. The battery cells in the first row of battery cells 10a and the second row of battery cells 10b have the same composition but are arranged in different orders.

Therefore, this also provides an optional alternative for the selection and arrangement of different battery cells in the battery module 10.

Referring to Fig. 7, along the width direction of the battery cells, the first row of battery cells 10a includes one or more layers of first battery cells 11 arranged along the width direction of the battery cells and one or more layers of second battery cells 12 arranged along the width direction of the battery cells. The one or more layers of first battery cells 11 and the one or more layers of second battery cells 12 are arranged along the length direction of the battery cells, and the number of layers of the first battery cells 11 is different from that of the second battery cells 12, but the overall width of the one or more layers of first battery cells 11 is the same as that of the one or more layers of second battery cells 12. Specifically, in Fig. 7, the first row of battery cells 10a includes one layer of second battery cell 12 and two layers of first battery cells 11, the width of the second battery cell 12 is twice that of the second battery cell 11, the two layers of first battery cells 11 is positioned on the right side of the one layer of second battery cell 12 along the width direction of the battery cells, and the two layers of first battery cells 11 in the second two of battery cells 10b is positioned on the left side of the one layer of second battery cell 12 along the width direction of the battery cells, thus forming a staggered structure.

Therefore, this also provides an optional alternative for the selection and arrangement of different battery cells in the battery module 10.

Referring to Fig. 6, along the width direction of the battery cells in the battery module, the second row of battery cells 10b includes one or more layers of first battery cells 11 arranged along the width direction of the battery cells and one or more layers of second battery cells 12 arranged along the width direction of the battery cells. The one or more layers of first battery cells 11 and the one or more layers of second battery cells 12 are arranged along the length direction of the battery cells, and the number of layers of the first battery cells 11 is different from that of the second battery cells 12, but the overall width of the one or more layers of first battery cells 11 is the same as that of the one or more layers of second battery cells 12. Specifically, in Fig. 6, the second row of battery cells 10b includes one layer of second battery cells 12 and two layers of first battery cells 11, and along the length direction of the battery cells, the two layers of first battery cells 11 are located between the two second battery cells 12. As mentioned above, Fig. 7 also shows a configuration that the second row of battery cells 10b includes one or more layers of first battery cells 11 and one or more layers of second battery cells 12, and the different battery cells have different numbers of layers.

Furthermore, this also provides an optional alternative for the selection and arrangement of different battery cells in the battery module 10.

Referring to Fig. 12, the tenth embodiment of the battery module 10 shown in Fig. 12 further includes third battery cells 13, and the lengths of the third battery cells 13, first battery cells 11 and second battery cells 12 are different from each other. The first row of battery cells 10a is composed of the first battery cells 11 arranged along the length direction, the second row of battery cells 10b includes one or more layers of second battery cells 12 arranged along the width direction of the battery cells and one or more layers of third battery cells 13 arranged along the width direction of the battery cells, the one or more layers of second battery cells 12 and the one or more layers of third battery cells 13 are arranged along the length direction of the battery cells, and the number of layers of the second battery cells 12 is different from that of the third battery cells 13, but the overall width of the one or more layers of second battery cells 12 is the same as that of the one or more layers of third battery cells 13. Specifically, in Fig. 12, the first row of battery cells 10a includes one first battery cell 11, the second row of battery cells 10b includes two layers of second battery cells 12 and one layer of third battery cells 13, and along the width direction of the battery cells, the two layers of second battery cells 12 are located between the two third battery cells 13.

Furthermore, this also provides an optional alternative for the selection and arrangement of different battery cells in the battery module 10.

Referring to Fig. 8, the sixth embodiment of the battery module 10 shown in Fig. 8 further includes third rows of battery cell 10c, along the width direction, the third row of battery cells 10c is adjacent to the second row of battery cells 10b, and the arrangement of the battery cell in the third row of battery cells 10c is the same as the arrangement of the battery cell in the second row of battery cells 10b. In Fig. 8, each of the second row of battery cells 10b and the third row of battery cells 10c is composed of the first battery cell 11, and the first row of battery cells 10a is composed of the second battery cells 12. Specifically, each of the second row of battery cells 10b and third row of battery cells 10c includes one first battery cell 11, and the first row of battery cells 10a includes two second battery cells 12.

The seventh to tenth embodiments of the battery module 10 shown in Fig. 9-Fig. 12 also disclose the third row of battery cells 10c. In Fig. 9-Fig. 12, the third row of battery cells 10c is adjacent to the first row of battery cells 10a along the width direction of the battery cells, and the arrangement of the third row of battery cells 10c is the same as that of the adjacent first row of battery cells 10a. One of the differences between the different embodiments of the battery module 10 in Fig. 9-Fig. 12 is that the size and number of the battery cells included in each embodiment are different.

The ninth embodiment of the battery module 10 shown in Fig. 11 further includes fourth rows of battery cells 10d, the fourth rows of battery cells 10d is adjacent to the second row of battery cells 10b along the width direction of the battery cells, and the arrangement of the battery cell in the fourth row of battery cells 10d is the same as that of the battery cell in the second row of battery cells 10b. That is, in Fig. 11, the third row of battery cells 10c, the first row of battery cells 10a, the second row of battery cells 10b and the fourth row of battery cells 10d are arranged in sequence along the width direction of the battery cells.

That is, the battery module in the present application may further include one or more additional rows of battery cells in addition to the first rows of battery cells and the second rows of battery cells, and the one or more rows of battery cells may be adjacent to the first row of battery cells or the second row of battery cells, and the arrangement of the battery cells in the one or more rows of battery cells may be the same as that of the battery cells in the first row of battery cells or the second row of battery cells.

Furthermore, this also provides an optional alternative for the selection and arrangement of different battery cells in the battery module 10.

Returning to Fig. 3 again, the first embodiment of the battery module 10 in Fig. 3 includes multiple first rows of battery cells 10a and second rows of battery cells 10b alternately arranged along the width direction of the battery cells. Specifically, the battery module 10 in Fig. 3 includes a total of 10 rows of first rows of battery cells 10a and second rows of battery cells 10b arranged alternately. The different embodiments shown in Fig. 4-Fig. 7 also show multiple first rows of battery cells 10a and second rows of battery cells 10b alternately arranged in the battery module 10 along the width direction of the battery cells.

The different embodiments of the battery module 10 shown in Fig. 8, Fig. 9, Fig. 10 and Fig. 12 include multiple first rows of battery cells 10a, second rows of battery cells 10b and third rows of battery cells 10c alternately arranged along the width direction of the battery cells. The ninth embodiment of the battery module 10 shown in Fig. 11 includes multiple first rows of battery cells 10a, second rows of battery cells 10b, third rows of battery cells 10c and fourth rows of battery cells 10d alternately arranged along the width direction of the battery cells. In addition, in the present application, unless otherwise specified, first, second, third, fourth, etc. do not imply the order, but are only used to distinguish different terms, and without clearly specifying the order, the description of different rows of battery cells does not imply that they must be arranged in the described order.

By alternately arranging the multiple rows of battery cells, the staggered effect can be further enhanced, and the battery energy can be further improved.

Returning to Fig. 3 again, in the first embodiment of the battery module 10 in Fig. 3, the length of the first battery cells 11 is greater than that of the second battery cells 12, and specifically is twice that of the second battery cells 12. In addition, in Fig. 3, along the width direction of the battery cells, the centerline along the length direction of the first battery cell 11 in the first row of battery cells 10a is the substantially opposite to a side wall of one second battery cell 12 in the second row of battery cells. As mentioned above, since the expansion degree is the lightest at the side walls of the battery cell and the largest at the centerline along the length direction or the center of the surface with the largest area, the accumulation of expansion in the battery pack can be reduced to the greatest extent by such arrangement. Similar configurations are shown in different embodiments of the battery module 10 shown in Fig. 4-Fig. 11.

In the present application, the use of battery cells with different lengths allows for more convenient use of battery cells with different chemical systems. For example, in the above embodiments, the positive electrode active material of the first battery cell 11, the second battery cell 12 and/or the third battery cell 13 may be different.

In some embodiments, the positive electrode active material may be a positive electrode active material for batteries well known in the art. The positive electrode material may be, for example, lithium-cobalt oxide, lithium-nickel oxide, lithium-manganese oxide, lithium-vanadium oxide, manganese-nickel-cobalt composite oxide, nickel-cobalt-aluminum composite oxide, transition metal oxide, polyanion compound and Prussian blue compounds, etc. For example, the positive electrode active material may include at least one of a lithium-containing phosphate of olivine-structure, a lithium transition metal oxide, and a modified compound thereof. However, the present application is not limited to these materials, and other conventional materials useful as positive electrode active materials for batteries can also be used. These positive electrode active materials may be used alone or in combination of two or more. Here, examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), lithium-nickel-cobalt-aluminum oxide (such as LiNi_{0.85}Co_{0.15}Al_{0.05}O₂) and their respective modified compounds. Examples of the lithium-containing phosphate with olivine structure may include, but are not limited to, at least one of lithium iron phosphate (such as LiFePO₄ (also abbreviated as LFP)), lithium iron phosphate-carbon composite, lithium manganese phosphate (such as LiMnPO₄), lithium manganese phosphate-carbon composite, lithium iron manganese phosphate, and lithium iron manganese phosphate-carbon composite.

In addition, the battery cells with different lengths may be battery cells with different energy densities. For example, some battery cells are batteries with low energy density/gram capacity, such as sodium-ion batteries, lithium iron phosphate batteries, and lithium manganate batteries, while the other battery cells are batteries with high energy density/gram capacity, such as ternary NCM or NCA batteries, lithium metal batteries, etc. By using the battery cells with different chemical systems, the energy density of the battery module can be more conveniently custom designed.

The first battery cells 11, the second battery cells 12 and/or the third battery cells 13 use different positive electrode active materials, for example, one or two kinds of the battery cells are ternary batteries, and the other or two kinds are lithium iron phosphate batteries, so that the cost of the entire battery module and accordingly the cost of the entire battery pack is reduced by using the lithium iron phosphate batteries, and the safety of the battery pack is improved due to the characteristic of resistance to thermal runaway, for example, in a case of thermal runaway of the ternary batteries, the lithium iron phosphate batteries can be used as a barrier to maintain the safety of the entire battery module and battery pack. Meanwhile, the use of the ternary batteries ensures the good performance of the battery module and the battery pack. In addition, the different curve characteristics of the ternary batteries and lithium iron phosphate batteries can also be used to improve the measurement accuracy of the state of charge of the battery pack.

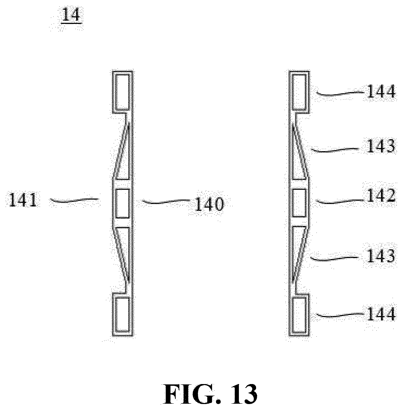

Referring to Fig. 3-Fig. 12, each embodiment of the battery module 10 shown in Fig. 3-Fig. 12 includes end plates 14. The end plates 14 are provided in pairs, and the end plates 14 are respectively arranged at two end portions of the battery module 10 along the width direction of the battery cells. Referring to Fig. 13, Fig. 13 shows a schematic structural diagram of the paired end plates 14. The end plate 14 includes a first surface 140 and a second surface 141. The first surface 140 is arranged closer to battery cells and in contact with the battery cells when assembled with the battery cells, and the second surface 141 is arranged farther away from the battery cells and opposite to the first surface 140 along the width direction of the battery cells when assembled with the battery cells. The first surface 140 is formed as a flat surface so as to be in firm contact with the battery cells. The second surface 141 includes a middle portion 142 and two inclined portions 143, and the inclined portions 143 are disposed on two sides of the middle portion 142 along the vertical direction (that is the up-down direction in Fig. 13) of the end plates, and are inclined from the middle portion 142 towards the first surface 140. The end plate may be made of aluminum alloy or polymer plastic, which is not particularly limited in the present application. In addition, the end plate 14 is formed with a hollow structure. On the premise of ensuring the basic structural strength, the hollow structure can further reduce the weight of the end plate and the entire battery module.

Therefore, the end plate 14 has a configuration that is thick in the middle and thin on two sides. The middle portion has higher structural strength, so that the deformation of the end plate caused by the expansion of the surface with the largest area in the battery can be resisted. Due to the arrangement of the inclined portions on two sides, binding can be more conveniently performed, and furthermore, the crosswise binding of the strap can be facilitated when the paired end plates are assembled with the plurality of battery cells.

In Fig. 13, the end plate 14 further includes two stopper portions 144 in pairs. Each stopper portion 144 is disposed on the side of the inclined portion 143 away from the middle portion 142, that is, at the end portion of the end plate 14 along the vertical direction. The thickness of the stopper portion 144 is formed to be greater than the thickness of the side of the inclined portion 143 adjacent thereto.

By arranging the stopper portions 144, the strap can be prevented from slipping off the end plates 14, when the strap is used for binding.

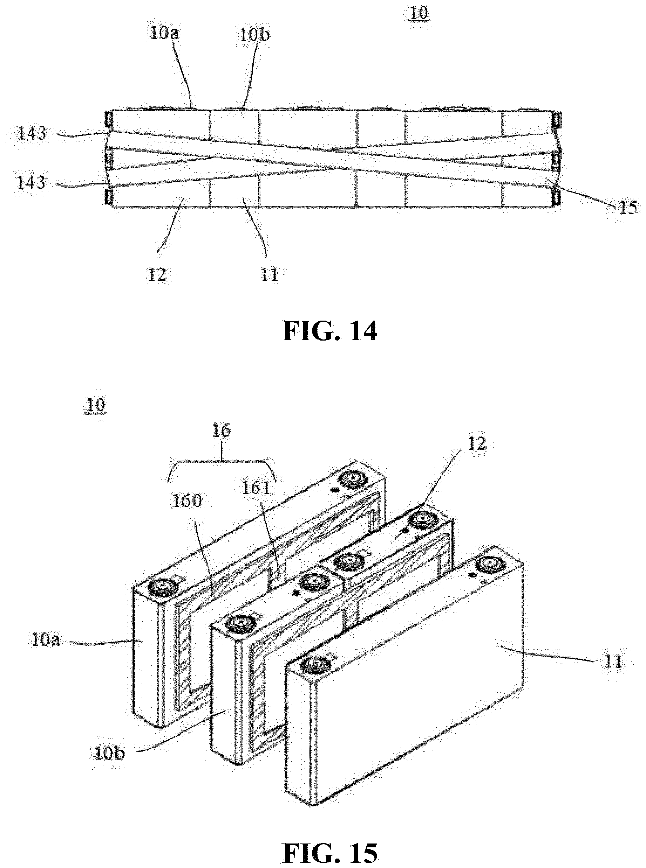

Referring to Fig. 14, Fig. 14 shows a side view of the battery module 10, wherein multiple first rows of battery cells 10a and second rows of battery cells 10b arranged alternately, and paired end plates 14 on two sides are bound together by a strap 15 to form the battery module 10. It can be seen from Fig. 14 that the vertical direction of the end plates 14 corresponds to the height direction of the battery module. The strap 15 is disposed on the outer periphery of the battery module 10 and is obliquely bound, that is, one end is connected to the inclined portion 143 on the upper side of one end plate 14, and the other end is connected to the inclined portion 143 on the lower side of the opposite end plate 14.

The strap is usually a steel strap or a polymer nylon bag, which is light in weight. Therefore, by using the strap to assemble the battery module 10, the weight of the assembled battery module can be further reduced. In addition, through the oblique binding method of the strap, a binding force can be applied to the battery module 10 in the entire range from the inclined portion on the upper side to the inclined portion on the lower side, so that the battery module 10 is more uniformly stressed and bound more firmly.

In addition, two straps 15 are shown in Fig. 14, and the two straps 15 are crosswise bound. Due to the crosswise binding, the battery module 10 is more uniformly stressed, which can ensure the consistency of expansion forces on the upper and lower sides of the battery module when the battery module expands, and will not lead to lithium plating due to excessive local stress of the battery caused by the difference of the expansion forces.

Moreover, through the mutual cooperation of the straps and the end plates, the overall structural rigidity of the battery pack can be further enhanced, and the need for reinforcement members in the battery pack can be further reduced.

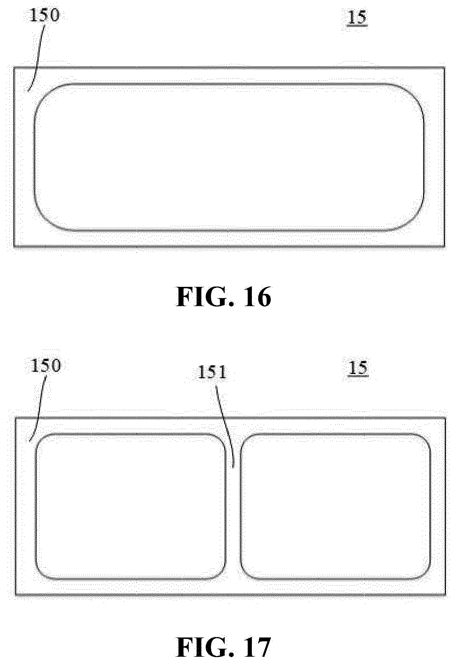

Fig. 15 is an exploded schematic structural diagram of battery cells and buffers in a battery module according to the present application. The arrangement of the battery cells in Fig. 15 corresponds to the first embodiment of the battery module 10 in Fig. 3. A buffer 15 is arranged between the adjacent first row of battery cells 10a and second row of battery cells 10b along the width direction of the battery cells. The thickness of a buffer pad may be 0.5 millimeter (mm) to 3 millimeters. Fig. 16 shows a first embodiment of the buffer 15. The area of the buffer 15 may be set to be slightly smaller than the area of the surface with the largest area of the first battery cell 11. By arranging the buffer pad between the two adjacent rows of battery cells, the expansion force of the battery can be absorbed when the surfaces with the largest area of the battery cells in the module expand. The buffer 15 includes a frame 150 and a hollow structure formed inside the frame. The hollow structure can further provide a buffer space for the expansion of the surfaces with the largest area of the battery cells in the module, so as to relieve the accumulation of the expansion force. In addition, heat insulation cotton can further be disposed in the hollow structure, and the heat insulation cotton can also play a role of heat insulation while alleviating expansion.

Fig. 17 shows a second embodiment of the buffer 15. In Fig. 17, the buffer 15 includes a frame 150 and a support rib 151 disposed inside the frame 150. Hollow structures are formed between the frame 150 and the support rib 151, and are not only opposite to the surface with the largest area of the first battery cell 11 in the first row of battery cells 10a, but also opposite to the surface with the largest area of the second battery cells 12 in the second rows of battery cells 10b.

By arranging the supporting rib, the structural rigidity of the buffer can be improved, so as to prevent the middle portion of the frame from bending downward by gravity due to, for example, the buffer being too thin.

The second embodiment of the buffer 15 in Fig. 17 corresponds to the buffer in Fig. 15, and can be applied to the first embodiment of the battery module 10 shown in Fig. 3. The position of the support rib 151 is set to correspond to the center of the surface with the largest area of the first battery cell 11 in the first row of battery cells 10a, that is, correspond to one edge of the second battery cell 12 in the second row of battery cells 10b.

In the present application, due to the staggered arrangement of the battery cells with different lengths, the centers of the surfaces with the largest area of the battery cells in the adjacent rows are offset from each other, and the center of the surface with the largest area of the battery cell in one row of battery cells abuts against the edge of the battery cell in the adjacent row. However, the edge of the battery cell forms a corner. When the center of the surface with the largest area expands to abut against the corner, the center of the surface with the largest area may be stressed too much, and the center of the surface with the largest area may be damaged with repeated charge and discharge and the accumulation of the expansion degree. By arranging the position of the support rib to correspond to the edge of the battery cell, the risk of damage to the surface with the largest area of the battery cell can be reduced.

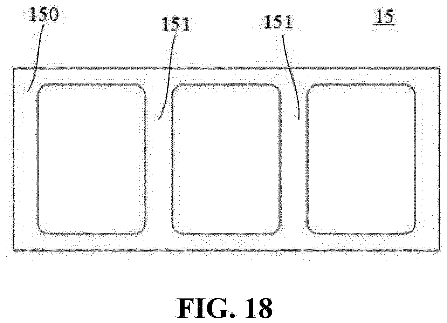

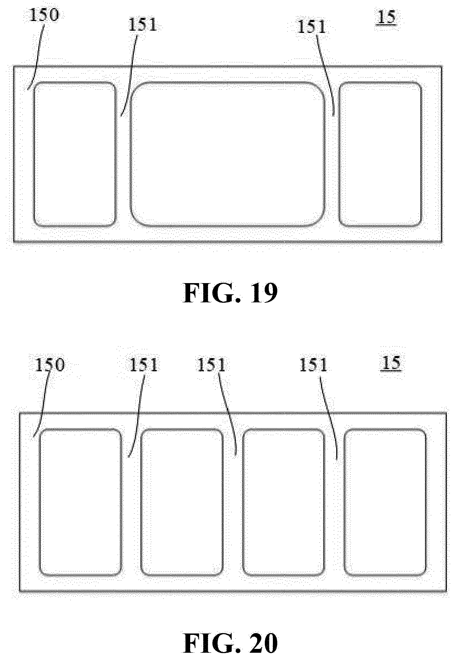

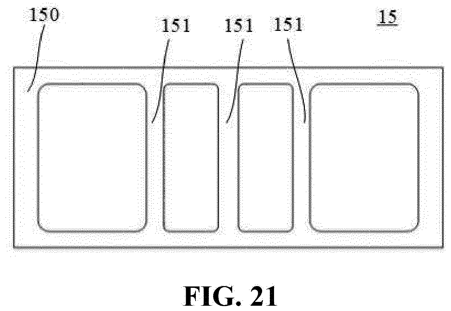

Fig. 18-Fig. 21 are schematic structural diagrams of a third embodiment to a sixth embodiment of the buffer according to the present application. The differences between different embodiments of the buffer are the number and positions of the support ribs. The buffer can be selected for different embodiments of the battery module 10 in Fig. 3-Fig. 12. For example, the second embodiment of the buffer in Fig. 17 may be disposed between the first row of battery cells 10a and the second row of battery cells 10b of the battery module 10 in Fig. 3, Fig. 8, Fig. 9, and Fig. 11. The third embodiment of the buffer in Fig. 18 may be disposed between the first row of battery cells 10a and the second row of battery cells 10b of the battery module 10 in Fig. 5 and Fig. 7. The fourth embodiment of the buffer in Fig. 19 may be disposed between the first row of battery cells 10a and the second row of battery cells 10b of the battery module 10 in Fig. 12. The fifth embodiment of the buffer in Fig. 20 may be disposed between the first row of battery cells 10a and the second row of battery cells 10b of the battery module 10 in Fig. 4 and Fig. 6. The sixth embodiment of the buffer in Fig. 21 may be disposed between the first row of battery cells 10a and the second row of battery cells 10b of the battery module 10 in Fig. 10. In this way, the supporting ribs can correspond to all edges in the adjacent rows of battery cells that may be in contact with the surfaces with the largest area, and therefore, possible damage caused by possible contact between the surfaces with the largest area and the edges after expansion can be avoided.

According to some embodiments of the present application, the present application further provides a battery pack 1, the battery pack 1 including a lower box 20 and any embodiment of the battery module 10 mentioned above. Referring to Fig. 3-Fig. 12, at least one column of battery modules is accommodated in the lower box, and each column of battery modules includes a plurality of battery modules 10 arranged along the width direction of the battery cells. The columns of battery modules may be fixed to the bottom of the lower box by means of thermally conductive adhesive or the like.

In addition, as shown in Fig. 3-Fig. 12, the battery pack 1 includes at least two columns of battery modules, and a longitudinal beam 201 is disposed between the two adjacent columns of battery modules. In addition, in the columns of battery modules, there is a gap of 1-3 mm between the adjacent battery modules at an initial stage of assembly, that is, the end plates of the adjacent battery modules are not in direct contact, but a gap of 1-3 mm is left, the gap being also configured to leave a buffer space for the expansion of the battery pack in a later stage.

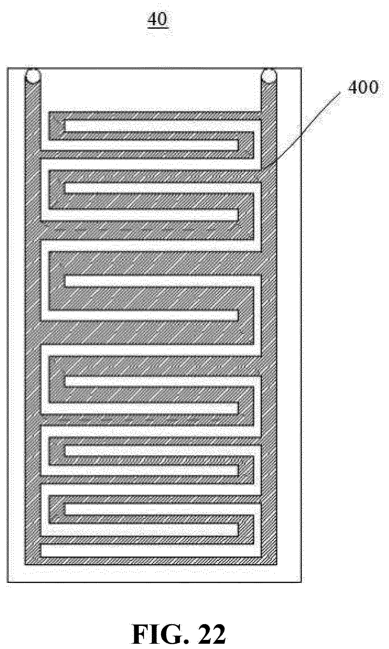

Fig. 22 is a schematic structural diagram of a cooling structure 40 of a battery pack according to the present application. The cooling structure 40 is disposed under the frame of the battery pack and a cooling channel 400. The cooling channel 400meanders along the width direction of the battery cells, and is configured for the flow of cooling fluid. The battery cells in the battery pack generate heat during repeated charge and discharge, and the cooling fluid is used to prevent the battery pack from overheating. The cooling channel 400 meanders along the width direction of the battery cells, that is, is formed into a meandering shape as shown in Fig. 22. As shown in Fig. 22, by making the cooling channel 400 extend parallel to the length direction of the battery cells and meander in the width direction, the contact area between the bottoms of the battery cells and the cooling channel is increased, heat dissipation is enhanced, and the bending resistance of the battery pack in the width direction of the battery cells can be further enhanced.

The cooling structure 40 may be formed into a plate shape. The cooling structure 40 may be made of metal with excellent thermal conductivity, such as copper, iron, aluminum, stainless steel, aluminum alloy, and so on, which is not particularly limited in the present application.

In some embodiments, the cross-sectional area of the cooling channel 400 varies, and the cross-sectional area of the cooling channel 400 in the middle portion of the battery module 10 is greater than that in the rest of the battery module 10 along the width direction of the battery cells. By designing the cross-sectional area of the cooling channel 400 in the middle portion to be larger, heat dissipation in the middle portion of the battery pack can be enhanced. Since the temperature distribution of the battery pack is higher at the center than at the edges, the uneven temperature may lead to amplified differences in the charge and discharge performance of the different battery cells, and may lead to safety accidents such as lithium plating. By setting the cross-sectional area of the cooling channel in the present application, the temperature of the battery pack can be more uniform.

According to some embodiments of the present application, the present application further provides an electrical apparatus, including any embodiment of the battery pack mentioned above, the battery pack being configured to provide electric energy.

The electrical apparatus may be any of the aforementioned apparatuses or systems in which the battery is applied.

According to some embodiments of the present application, the present application further provides a manufacturing method for a battery module, the manufacturing method including:
providing a plurality of battery cells, wherein some of the battery cells in the plurality of battery cells have different lengths from the remaining battery cells,
arranging the plurality of battery cells into at least two rows of battery cells along the width direction of the battery cells, the at least two rows of battery cells including a first row of battery cells and a second row of battery cells that are adjacent to each other, and
along the width direction of the battery cells, arranging a centerline along the length direction of at least one battery cell in the first row of battery cells to be not collinear with a centerline along the length direction of at least one battery cell in the second row of battery cells.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various examples can be combined in any manner as long as there is no structural conflict. The present application is not limited to the specific embodiments disclosed herein, but rather includes all technical solutions falling within the scope of the claims.

## Claims

1. A battery module, comprising at least two rows of battery cells stacked together along the width direction of the battery cells, the at least two rows of battery cells comprise a first row of battery cells and a second row of battery cells that are adjacent to each other; the first row of battery cells and the second row of battery cells comprise a plurality of battery cells in total, wherein some of the battery cells in the plurality of battery cells have different lengths from the remaining battery cells, and wherein, along the width direction of the battery cells, a centerline along the length direction of at least one battery cell in the first row of battery cells is not collinear with a centerline along the length direction of at least one battery cell in the second row of battery cells.

2. The battery module according to claim 1, wherein the first row of battery cells and the second row of battery cells have the same overall length, and the edge along the length direction of the first row of battery cells is flush with the edge along the length direction of the second row of battery cells.

3. The battery module according to claim 1, wherein along the width direction of the battery cells, the centerline along the length direction of each battery cell in the first row of battery cells is not collinear with the centerline along the length direction of each battery cell in the second row of battery cells.

4. The battery module according to any one of claims 1-3, wherein the plurality of battery cells comprises first battery cells and second battery cells, and the first battery cells and the second battery cells have different lengths.

5. The battery module according to claim 4, wherein the first row of battery cells is composed of the first battery cells arranged along the length direction, and the second row of battery cells is composed of the second battery cells arranged along the length direction.

6. The battery module according to claim 4, wherein the first row of battery cells is composed of the first battery cells arranged along the length direction, and the second row of battery cells is composed of the first battery cells and the second battery cells arranged along the length direction.

7. The battery module according to claim 4, wherein the first row of battery cells is composed of the first battery cells and the second battery cells arranged in a first order along the length direction, the second row of battery cells is composed of the first battery cells and the second battery cells arranged in a second order along the length direction, and the first order is different from the second order.

8. The battery module according to claim 7, wherein the first row of battery cells comprises m layers of first battery cells arranged along the width direction of the battery cells and n layers of second battery cells arranged along the width direction of the battery cells, the m layers of first battery cells and the n layers of second battery cells are arranged along the length direction of the battery cells, m is different from n, and the m layers of first battery cells and the n layers of second battery cells have the same width.

9. The battery module according to claim 6 or 7, wherein the second row of battery cells comprises m layers of first battery cells arranged along the width direction of the battery cells and n layers of second battery cells arranged along the width direction of the battery cells, the m layers of first battery cells and the n layers of second battery cells are arranged along the length direction of the battery cells, m is different from n, and the m layers of first battery cells and the n layers of second battery cells have the same width.

10. The battery module according to claim 4, wherein the plurality of battery cells further comprise third battery cells of which the length is different from the lengths of both the first battery cells and the second battery cells, the first row of battery cells is composed of the third battery cells arranged along the length direction, the second row of battery cells comprises m layers of first battery cells arranged along the width direction of the battery cells and n layers of second battery cells arranged along the width direction of the battery cells, the m layers of first battery cells and the n layers of second battery cells are arranged along the length direction of the battery cells, m is different from n, and the m layers of first battery cells and the n layers of second battery cells have the same width.

11. The battery module according to any one of claims 5-10, further comprising a third row of battery cells adjacent to the second row of battery cells along the width direction, and the arrangement of the battery cells in the third row of battery cells is the same as that of the battery cells in the second row of battery cells or the first row of battery cells.

12. The battery module according to any one of claims 1-10, wherein along the width direction of the battery cells, the battery module comprises multiple first rows of battery cells and second rows of battery cells arranged alternately.

13. The battery module according to claim 11, wherein along the width direction of the battery cells, the battery module comprises multiple first rows of battery cells, second rows of battery cells and third rows of battery cells arranged alternately.

14. The battery module according to any one of claims 5-7, wherein the length of the first battery cells is greater than the length of the second battery cells, and along the width direction of the battery cells, the centerline along the length direction of the first battery cells in the first row of battery cells is substantially opposite to a side wall of one of the second battery cells in the second row of battery cells.

15. The battery module according to any one of claims 5-7, wherein the positive electrode active material of the first battery cells is different from that of the second battery cells.

16. The battery module according to any one of claims 1-15, further comprising two end plates disposed along the width direction, the end plate comprises a first surface close to the battery cells and a second surface away from the battery cells, and along a vertical direction, the second surface comprises a middle portion and two inclined portions disposed on two sides of the middle portion and inclined from the middle portion towards the first surface.

17. The battery module according to claim 16, wherein the end plate further comprises two stopper portions, and each stopper portion is disposed on the side of the inclined portion away from the middle portion.

18. The battery module according to claim 16 or 17, further comprising a strap disposed on the periphery of the battery module, one end of the strap is connected to the inclined portion on the upper side of one end plate, and the other end is connected to the inclined portion on the lower side of the other end plate.

19. The battery module according to claim 18, wherein there are two straps disposed crosswise.

20. The battery module according to any one of claims 1-19, further comprising a buffer disposed between the adjacent first row of battery cells and second row of battery cells.

21. The battery module according to claim 20, further comprising a buffer having an outer frame and one or more support ribs disposed inside the outer frame, and a hollow structure is formed between the support ribs and the outer frame, and is opposite to the surface with the largest area of one battery cell in the first row of battery cells or the second row of battery cells.

22. The battery module according to claim 21, wherein the support ribs abut against an edge along the length direction of at least one battery cell in the two adjacent rows of battery cells.

23. A battery pack, comprising a frame and at least one column of battery modules according to any one of claims 1-22, the at least one column of battery modules being accommodated in the frame, and each column of battery modules comprises a plurality of battery modules arranged along the width direction of battery cells.

24. The battery pack according to claim 23, wherein the battery pack comprises at least two columns of battery modules, and a longitudinal beam is provided between the two adjacent columns of battery modules.

25. The battery pack according to claim 23 or 24, further comprising a cooling structure having a cooling channel meandering along the width direction of the battery cells, and the cooling channel is configured for the flowing of cooling fluid.

26. The battery pack according to claim 25, wherein along the width direction of the battery cells, the cross-sectional area of the cooling channel in the middle portion of the battery module is greater than the cross-sectional area of the cooling channel in the rest of the battery module.

27. An electrical apparatus, comprising the battery pack according to any one of claims 23-26, the battery pack being configured to provide electric energy.

28. A manufacturing method for a battery module, comprising:
providing a plurality of battery cells, wherein some of the battery cells in the plurality of battery cells have different lengths from the remaining battery cells,
arranging the plurality of battery cells into at least two rows of battery cells along the width direction of the battery cells, the at least two rows of battery cells including a first row of battery cells and a second row of battery cells that are adjacent to each other, and
along the width direction of the battery cells, arranging a centerline along the length direction of at least one battery cell in the first row of battery cells to be not collinear with a centerline along the length direction of at least one battery cell in the second row of battery cells.
